# EUROPÄISCHE PATENTSCHRIFT

(11) **EP 3 621 835 B1**
(45) Veröffentlichungstag und Bekanntmachung des Hinweises auf die Patenterteilung: **27.09.2023**
(21) Anmeldenummer: 18725134.3
(22) Anmeldetag: 04.05.2018
(51) Int. Cl.: B60H 1/00, H04W 4/40, B60H 1/22, H04L 12/40

(54) **VERFAHREN ZUR INBETRIEBNAHME EINES KLIMASYSTEMS, COMPUTERLESBARES SPEICHERMEDIUM UND KLIMASYSTEM**
METHOD FOR THE START-UP OF AN AIR-CONDITIONING SYSTEM, COMPUTER-READABLE STORAGE MEDIUM, AND AIR-CONDITIONING SYSTEM
PROCÉDÉ POUR LA MISE EN SERVICE D'UN SYSTÈME DE CLIMATISATION, SUPPORT D'ENREGISTREMENT LISIBLE PAR ORDINATEUR ET SYSTÈME DE CLIMATISATION

(30) Priorität: 08.05.2017 DE 102017109863
(43) Veröffentlichungstag der Anmeldung: 18.03.2020
(73) Patentinhaber: Webasto SE, 82131 Stockdorf (DE)
(72) Erfinder: SONNEK, Sebastian, 82131 Stockdorf (DE); THÜRMER, Daniel, 82131 Stockdorf (DE); KIRSCH, Christian, 82131 Stockdorf (DE); RUTHENBERG, Jörg, 82131 Stockdorf (DE)
(74) Vertreter: Prüfer & Partner mbB Patentanwälte · Rechtsanwälte
(86) Internationale Anmeldenummer: PCT/EP2018/061526
(87) Internationale Veröffentlichungsnummer: WO 2018/206433

(56) Entgegenhaltungen:
- EP-A1- 2 688 267
- DE-A1- 10 241 587
- DE-A1-102007 040 200

## Beschreibung

Die Erfindung betritt ein Verfahren zur Inbetriebnahme eines Klimasystems eines Fahrzeugs, ein entsprechendes computerlesbares Speichermedium sowie ein Klimasystem.

In vielen Fällen ist es möglich, nachträglich eine Standheizung in ein Fahrzeug einzubauen. Nach dem Einbau ist es notwendig, die entsprechenden Fahrzeugkomponenten ordnungsgemäß in Betrieb zu nehmen, um eine zuverlässige Funktion sowie Garantieansprüche zu gewährleisten. Zur Inbetriebnahme kann ein Techniker einen Laptop mit der Standheizung verbinden. Eine Software auf dem Laptop kann dann die Inbetriebnahme ausführen und überwachen und ein entsprechendes Inbetriebnahmeprotokoll für die Dokumentation anfertigen.

Da sich die Fahrzeuge von verschiedenen Herstellern stark unterscheiden, ist es notwendig, dass die Inbetriebnahmesoftware speziell für einen bestimmten Fahrzeugtyp konfiguriert ist. Der Techniker muss also den entsprechenden Fahrzeugtyp sowie die eingebaute Standheizung auswählen bevor eine Inbetriebnahme der Standheizung erfolgen kann. Auch muss die Inbetriebnahme genau überwacht werden, was zeitaufwendig und kostenintensiv ist. Das Auffinden von Fehlern, z.B. falsch oder schlecht angeschlossenen Kabeln, ist zeitaufwendig. Dokument DE 10 2007 040200 A1 beschreibt eine Datenabfrage in Verbindung mit der Aktivierung eines Klimasystems.

Ausgehend von dem beschriebenen Stand der Technik ist es Aufgabe der Erfindung ein Verfahren zur Inbetriebnahme eines Klimasystems anzugeben, welches eine automatische Inbetriebnahme ermöglicht. Ferner soll ein entsprechendes computerlesbares Speichermedium angegeben werden. Darüber hinaus ist es Aufgabe der Erfindung, ein Klimasystem anzugeben, welches das Auffinden von Fehlern erleichtert.

Die Aufgabe wird gelöst durch ein Verfahren zur Inbetriebnahme eines Klimasystems eines Fahrzeugs nach Anspruch 1.

Ein Kern der Erfindung ist, dass Funktionen des Klimasystems nur dann aktiviert werden, wenn eine fehlerfreie Inbetriebnahme durchgeführt worden ist. Ein Fehler im Sinne der Erfindung liegt vor, wenn der erfasste Ist-Fahrzeugzustand nicht dem Soll-Fahrzeugzustand entspricht. Erfindungsgemäß kann eine automatische Bestimmung der Funktionsfähigkeit des Klimasystems auf einfache Art und Weise durchgeführt werden.

In einer Ausführungsform kann der Soll-Datensatz eine Vielzahl von Fahrzeugkomponenten und/oder Signale von Fahrzeugkomponenten angeben. Erfindungsgemäß sind Angaben zu Fahrzeugkomponenten im Soll-Datensatz enthalten sind. Erfindungsgemäß ist im Soll-Datensatz enthalten, dass bestimmte Fahrzeugkomponenten vorhanden sein müssen. Wird durch den Vergleich des Soll-Fahrzeugzustands mit dem Ist-Fahrzeugzustand festgestellt, dass nicht alle erforderlichen Fahrzeugkomponenten vorhanden sind, wird die entsprechende Funktion des Klimasystems nicht aktiviert. So kann auch festgestellt werden, ob ein falscher Soll-Datensatz eingelesen ist, z.B. weil der Soll-Datensatz für einen anderen Fahrzeugtyp vorgesehen ist.

In einer Ausführungsform kann das Erfassen durch Messen von Signalen ausgeführt werden, die auf einem Bussystem übertragen werden können, insbesondere auf einem Klimabus und/oder einem Fahrzeugbus.

Es ist eine Vielzahl an Möglichkeiten denkbar, wie der Ist-Datensatz erfasst werden kann. Besonders vorteilhaft ist es, wenn die Kommunikation über Bussysteme mitgehört wird. Dies stellt eine besonders einfache Umsetzung dar, da es keiner Eingriffe in ein bestehendes Fahrzeugsystem bedarf. Eine weitere Möglichkeit ist, dass durch eine mittelbare oder unmittelbare Kommunikation mit den Fahrzeugkomponenten der Ist-Datensatz erfasst wird. Auch hier kann eine Buskommunikation eingesetzt werden. Eine direkte Kommunikation (z.B. seitens einer Gatewayeinrichtung) hat den Vorteil, dass Kenndaten der Fahrzeugkomponenten abgefragt werden können und so im Allgemeinen gezielter Daten gesammelt werden können. Die Zeit, die für die Inbetriebnahme notwendig ist, wird also reduziert.

In einer Ausführungsform kann das Messen ein Messen von Spannung und/oder Strom an einem Stecker einer Gatewayeinrichtung umfassen.

Es kann also nicht nur das Vorhandensein von Komponenten überprüft werden, sondern auch, ob die Komponenten korrekt angesprochen werden. Hierzu können Spannungen und Ströme gemessen werden, die über Stecker abgegeben werden. Der Soll-Datensatz kann also Angaben zu zulässigen Strömen und Spannungen angeben. Dadurch kann verhindert werden, dass unzulässige Ströme oder Spannungen Komponenten beschädigen, die ebenfalls an das Klimasystem angeschlossen sind. Die Ausfallsicherheit des gesamten Systems wird dadurch erhöht.

In einer Ausführungsform kann das Kommunizieren ein Auslesen von Statusinformationen und/oder Steuerbefehlen auf einem Fahrzeugbus umfassen.

Wenn Statusinformationen und/oder Steuerbefehle von einem Fahrzeugbus ausgelesen werden, um den Ist-Fahrzeugzustand zu ermitteln, können auf einfach Art die Informationen gesammelt werden, die den Ist-Datensatz bilden.

In einer Ausführungsform kann das vergleichen einen Abgleich umfassen, ob die Daten des Ist-Datensatzes in dem Soll-Datensatz enthalten sind.

Es ist also auch möglich, dass der Ist-Datensatz eine Teilmenge des Soll-Datensatzes bildet. Durch den beschriebenen Abgleich kann das Fehlen einzelner Fahrzeugkomponenten festgestellt werden. Ferner kann dadurch ermittelt werden, ob einzelnen Fahrzeugkomponenten wie gewünscht funktionieren.

In einer Ausführungsform kann der Soll-Datensatz mindestens eine Fahrzeugkomponente bezeichnen, wobei das Vergleichen ein Prüfen umfassen kann, ob ein Signal von der mindestens einen bezeichneten Fahrzeugkomponente gemessen ist.

Durch feststellen, ob das Signal von der mindestens einen Fahrzeugkomponente gemessen ist, wird eine weitere Möglichkeit angegeben, wie festgestellt werden kann, dass eine erwartete Fahrzeugkomponente vorhanden ist.

In einer Ausführungsform kann das Verfahren umfassen:
- Prüfen einer/der Vielzahl von Fahrzeugkomponenten unter Verwendung des Soll-Datensatzes und des Ist-Datensatzes;
- Speichern eines Fehlerprotokolls unter Verwendung der geprüften Vielzahl von Fahrzeugkomponenten.

Es kann also auch ein Fehlerprotokoll erstellt werden, sodass Probleme gezielt behoben werden können, wenn das Klimasystem nicht fehlerfrei in Betrieb genommen worden ist. Z.B. wird es einem Techniker durch das Fehlerprotokoll möglich, eine beschädigte Fahrzeugkomponente zu identifizieren und zu tauschen.

In einer Ausführungsform erfolgt der Vergleich des Soll-Datensatzes mit dem Ist-Datensatz im Rahmen einer Inbetriebnahmeroutine. Dies Inbetriebnahmeroutine kann in funktionell, z.B. in Sub-Routinen, gegliedert sein. Jede Sub-Routine kann das Vorhandensein und/oder die Funktion, einer Teilmenge der Fahrzeugkomponenten überprüfen.

In einer Ausführungsform werden unterschiedliche Konfigurationsdateien verwendet, um die Inbetriebnahmeroutine, insbesondere die Sub-Routinen z.B. für spezielle Fahrzeug- und Motortypen, zu individualisieren.

In einer Ausführungsform laufen zumindest einige der genannten Sub-Routinen, parallel bzw. quasi parallel ab. So kann der Inbetriebnahmevorgang, bei dem häufig auf eine Rückmeldung oder Handlung des Fahrzeugs und/oder der entsprechenden Fahrzeugkomponente gewartet werden muss, erheblich beschleunigt werden. In einer Ausführungsform gibt eine (zusätzliche) oder die bereits genannte Konfigurationsdatei eine Reihenfolge und/oder einen Startzeitpunkt (z.B. in Reaktion auf ein Ereignis) für die Ausführung zumindest einiger der Sub-Routinen vor. In einer (weiteren) Ausführungsform gibt eine/die Konfigurationsdatei vor, welche Sub-Routinen parallel ausgeführt werden können.

Die Aufgabe wird ferner gelöst durch ein computerlesbares Speichermedium nach Anspruch 9.

Es ergeben sich ähnliche oder identische Vorteile, wie sie bereits im Zusammenhang mit dem Verfahren beschrieben worden sind.

Das computerlesbare Speichermedium kann ein oder mehrere Konfigurationsdateien umfassen, wie diese vorab beschrieben wurden.

Die Aufgabe wird ferner gelöst durch ein Klimasystem für ein Fahrzeug nach Anspruch 10.

Es kann eine Gatewayeinrichtung vorgesehen sein, die eine Überprüfung der an den Fahrzeugbus angeschlossenen Fahrzeugkomponenten durchführt. Eine Fahrzeugkomponente kann jede Komponente sein, die vor oder nach Auslieferung des Fahrzeugs in dem Fahrzeug verbaut ist oder nicht.

In einer Ausführungsform kann ein Steuergerät des Fahrzeugs vorgesehen sein, wobei die Gatewayeinrichtung dazu ausgebildet sein kann, eine von dem Steuergerät über den Fahrzeugbus übertragene Fahrzeugkennung einem Soll-Fahrzeugzustand zuzuordnen.

In einer Ausführungsform implementiert die Gatewayeinrichtung zumindest eines der vorab beschriebenen Verfahren.

Die Fahrzeugkennung kann also zur Zuordnung eines Soll-Fahrzeugzustands verwendet werden. So kann überprüft werden, ob für das Fahrzeug der richtige Soll-Fahrzeugzustand zum Vergleich herangezogen wird. Wenn nicht der richtige Soll-Fahrzeugzustand herangezogen wird, kann eine Fehlermeldung ausgegeben werden. Auch kann die Inbetriebnahme unmittelbar abgebrochen werden, da eine weitere Überprüfung nicht zu korrekten Ergebnissen führen kann.

In einer Ausführungsform kann das Klimasystem einen Heizer, insbesondere einen Zuheizer, und mindestens einen Temperatursensor umfassen, die jeweils über einen Klimabus kommunikativ mit der Gatewayeinrichtung verbunden sein können, wobei die Gatewayeinrichtung dazu ausgebildet sein kann, den Zuheizer zu aktiveren, wenn ein durch den Temperatursensor bereitgestellter Temperaturwert durch den Soll-Datensatz angegeben wird.

Es kann also auch im Zusammenspiel verschiedener Komponenten die Funktionsfähigkeit des Klimasystems überprüft werden. Zunächst kann durch den Heizer der Innenraum eines Fahrzeugs geheizt werden. Die gemessene Temperatur wird dann mit einer erwarteten Temperatur verglichen. Liegt eine Abweichung vor, so kann ein entsprechender Fehler dokumentiert werden und die Funktion der Gatewayeinrichtung wird nicht aktiviert. Es wird also möglich komplexe Szenarien zu testen, sodass ein zuverlässiger Betrieb des Klimasystems gewährleistet werden kann, sofern die Inbetriebnahme erfolgreich verläuft.

Weitere Ausführungsformen ergeben sich aus den Unteransprüchen.

Im Folgenden wird die Erfindung anhand mehrerer Ausführungsbeispiele mit Bezug auf die beiliegenden Figuren näher beschrieben. Dabei zeigen:
- Fig. 1: eine schematische Ansicht eines Fahrzeugs mit einem Klimabus, wobei an dem Klimabus einige Komponenten, umfassend eine Klimaeinrichtung, angeschlossen sind;
- Fig. 2: ein Sequenzdiagram zur Inbetriebnahme eines Klimasystems; und
- Fig. 3: eine schematische Ansicht einer Gatewayeinrichtung.

In der nachfolgenden Beschreibung werden für gleiche und gleichwirkende Teile dieselben Bezugsziffern verwendet.

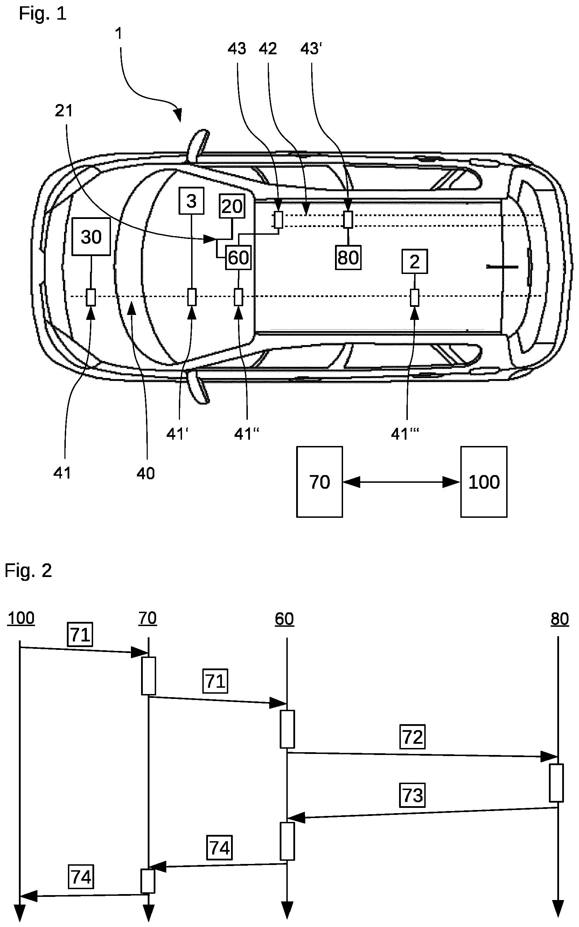

Das in Fig. 1 gezeigte Fahrzeug 1 verfügt über einen Heizer 30, eine Gatewayeinrichtung 60, ein Bedienelement 2, eine Lüftungseinrichtung 20 und eine Lüfterklappe 3. Der Heizer 30, die Gatewayeinrichtung 60 und das Bedienelement 2 sind an dem Klimabus 40 über Anschlüsse 41, 41', 41", 41‴ angeschlossen und über den Klimabus 40 miteinander verbunden. In dem gezeigten Ausführungsbeispiel ist der Klimabus 40 als W-BUS ausgebildet.

In dem Ausführungsbeispiel der Fig. 1 ist das Bedienteil 2 als Eingabe/Ausgabegerät ausgebildet. Der Fahrer des Fahrzeugs 1 kann über das Bedienteil 2 eine Solltemperatur als Zieltemperatur im Innenraum des Fahrzeugs 1 eingeben. Das Bedienteil 2 sendet daraufhin die Solltemperatur als Zielparameter über den Anschluss 41 auf dem Klimabus 40 an die Gatewayeinrichtung 60. Die Gatewayeinrichtung 60 umfasst einen Temperatursensor, der die Temperatur im Innenraum des Fahrzeugs 1 misst. Wenn die durch den Fahrer eingestellte Solltemperatur nicht dem gemessenen Temperaturwert im Inneren des Fahrzeugs 1 entspricht, so sendet die Gatewayeinrichtung 60 einen Steuerbefehl über den Klimabus 40 an den Heizer 30. Wenn die Gatewayeinrichtung 60 festgestellt hat, dass die Temperatur im Inneren des Fahrzeugs 1 zu gering ist, so wird der Heizer 30 dazu veranlasst, zu heizen. Der Heizer 30 heizt den Fahrzeuginnenraum solange, bis die Gatewayeinrichtung 60 mittels ihres Temperatursensors misst, dass die Solltemperatur, die von dem Fahrzeughalter eingegeben wurde, erreicht ist.

Um ein effizientes Heizen des Fahrzeuginnenraums des Fahrzeugs 1 zu ermöglichen, sendet die Gatewayeinrichtung 60 zusätzlich Steuerbefehle an die Lüfterklappe 3. Die Lüfterklappe 3 umfasst einen Aktuator, z.B. einen Servomotor oder einen Schrittmotor, der dazu ausgebildet ist, einen Einstellwinkel der Lüfterklappe 3 zu verändern. Im gezeigten Ausführungsbeispiel wird die Lüfterklappe 3 derart eingestellt, dass ein möglichst großer Luftstrom durch sie hindurchströmen kann, z.B. auf 90 Grad.

Damit die erwärmte Luft durch die Lüfterklappe 3 hindurchströmen kann, sendet die Gatewayeinrichtung 60 darüber hinaus ein Pulsweitenmodulationssignal (PWM-Signal) an die Lüftungseinrichtung 20. Hierzu verfügt die Gatewayeinrichtung 60 über einen PWM-Controller, z.B. einen Mikrocontroller, der ein entsprechendes Signal über eine Lüftungsverbindung 21 ausgibt, die die Gatewayeinrichtung 60 mit der Lüftungseinrichtung 20 verbindet. Die Lüftungseinrichtung 20 verfügt über einen Aktuator, der unter Verwendung des PWM-Signals angetrieben wird. An dem Aktuator ist ein Ventilator angeordnet.

Ferner zeigt die Fig. 1 einen Fahrzeugbus 42. An dem Fahrzeugbus 42 sind die Gatewayeinrichtung 60 und ein Steuergerät 80 angeschlossen. Die Gatewayeinrichtung 60 ist als Slave des Fahrzeugbus 42 ausgebildet. Die Gatewayeinrichtung 60 nimmt also eine Doppelfunktion ein. Zum einen agiert sie als Master auf dem Klimabus 40 und zum anderen als Slave auf dem Fahrzeugbus 42. In einem weiteren Ausführungsbeispiel hat die Gatewayeinrichtung 60 bezüglich des Fahrzeugbus 42 lediglich eine Überwachungsfunktion und hört den Datenverkehr auf dem Fahrzeugbus 42 lediglich ab. Das bedeutet, die Gatewayeinrichtung 60 kann auch weder als Master noch als Slave auf dem Fahrzeugbus 42 ausgebildet sein. Im dargestellten Ausführungsbeispiel der Fig. 1 wird das Steuergerät 80 dazu verwendet, eine Benutzereingabe anzunehmen und über den Fahrzeugbus 42 der Gatewayeinrichtung als Fahrzeugdaten zur Verfügung zu stellen. Die Gatewayeinrichtung 60 verarbeitet die Fahrzeugdaten des Steuergeräts 80 und erzeugt Steuerbefehle, die über den Klimabus 40 an die Klimaeinrichtung 30 zur Steuerung der Klimaeinrichtung 30 übermittelt werden. Die Gatewayeinrichtung 60 wird also in dem gezeigten Ausführungsbeispiel als Brücke zwischen dem Klimabus 40 und dem Fahrzeugbus 42 eingesetzt.

Fig. 1 zeigt ferner einen Laptop 70, der kommunikativ mit einem Webserver 100 verbunden ist. Der Webserver 100 speichert eine Software mit einer Inbetriebnahmesoftware, die durch unterschiedliche Konfigurationsdateien an verschiedenen Fahrzeug- und Motortypen unterschiedlicher Hersteller angepasst ist. In einem Ausführungsbeispiel gibt es eine Inbetriebnahmesoftware, die in Abhängigkeit von einer Benutzereingabe und/oder von einem erfassten Signal, eine bestimmte Inbetreibnahmeroutine für einen bestimmten Fahrzeug- und/oder Motortypen auswählt und durchläuft. Auf dem Laptop 70 kann bei der vorgenannten Ausführungsform ein Fahrzeugtyp ausgewählt werden, so dass eine entsprechende Inbetriebnahmesroutine abgearbeitet wird. Mittels des Laptops 70 kann die Software mit der Inbetriebnahmesoftware oder eine eigenständige Inbetriebnahmesoftware auf die Gatewayeinrichtung 60 übertragen werden

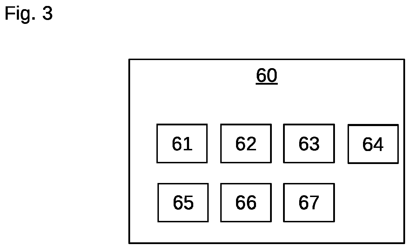

Die Gatewayeinrichtung 60 umfasst eine Speichereinrichtung 65 (siehe Fig. 3), die Software speichert. Die Software enthält Instruktionen, die die Steuerung des Heizers 30 sowie der Lüftungseinrichtung 20 angeben. Ferner gibt die Software vor, welche Komponenten im Fahrzeug eingebaut sein müssen, damit eine Zuheizung zuverlässig ausgeführt werden kann. Die eingebauten Komponenten werden insbesondere durch den Fahrzeugtyp bestimmt. Die Software, insbesondere die enthaltene Inbetriebnahmesoftware, umfasst daher Angaben darüber, mit welchem Fahrzeugtyp sie eingesetzt werden kann. Zum Laden bzw. Flashen der Software ist in der Speichereinrichtung 65 ferner ein Bootloader vorgesehen. Der Bootloader enthält einige grundsätzliche Funktionalitäten, wie das Bereitstellen einer Kommunikationsschnittstelle zum Empfang von Daten. Insbesondere kann über die Kommunikationsschnittstelle die Software bei Inbetriebnahme empfangen werden, die zur Steuerung der angeschlossenen Komponenten im Fahrzeug 1 eingesetzt werden kann. Zur Inbetriebnahme der mit der Gatewayeinrichtung 60 verbundenen Fahrzeugkomponenten 2, 3, 20, 30, 80 speichert die Gatewayeinrichtung 60 die Inbetriebnahmesoftware. Es ist daher keine externe Softwarekomponente, z.B. auf einem Laptop 70, notwendig, da die Inbetriebnahme von der Gatewayeinrichtung 60 selbst ausgeführt wird. Im gezeigten Ausführungsbeispiel ist die Inbetriebnahmesoftware ein Teil der Software bzw Firmware. Daher werden die Begriffe im Folgenden synonym verwendet.

Die Fig. 2 zeigt ein Sequenzdiagram, welches die Schritte zur Inbetriebnahme eines Klimasystems zeigen. Zunächst wird von dem Webserver 100 die konfigurierte Software bzw. Firmware 71 auf ein mobiles Endgerät 70, wie z.B. einen Laptop 70, heruntergeladen. Der Nutzer gibt hierzu den Fahrzeugtyp und/oder Motortyp an, sodass eine dem Fahrzeug entsprechend konfigurierte Firmware 71 von dem Webserver 100 ausgewählt und auf das mobile Endgerät 70 übertragen wird.

Anschließend wird das mobile Endgerät 70 mit der Gatewayeinrichtung 60 verbunden. Diese Verbindung kann kabelgebunden, z.B. per USB, oder drahtlos, z.B. per Bluetooth, ausgeführt werden. Im nächsten Schritt wird die Firmware 71 auf die Gatewayeinrichtung 60 übertragen. Die korrekte Übertragung der Daten kann durch einen Vergleich mit einer Prüfsumme, z.B. einem Hash-Wert, kontrolliert werden.

Die Inbetriebnahme kann auf verschieden Arten initiiert werden. In einem Ausführungsbeispiel kann die Inbetriebnahme automatisch nach erfolgreicher Übertragung gestartet werden. Im gezeigten Ausführungsbeispiel ist es notwendig, dass der Fahrer oder ein Techniker die Inbetriebnahme über das angeschlossene mobile Endgerät 70 startet.

Nachdem die Inbetriebnahme gestartet wurde, sendet die Gatewayeinrichtung 60 ein oder mehrere Abfragesignale 72 über den Fahrzeugbus 42 und den Klimabus 40, um die an die Busse 40, 42 angeschlossenen Komponenten 2, 3, 30, 80 zu identifizieren. Insbesondere ermittelt die Gatewayeinrichtung 60, ob die für die Firmware 71 benötigten oder erwarteten Fahrzeugkomponenten vorhanden sind. Die Informationen der Fahrzeugkomponenten bilden zusammen also einen Ist-Datensatz, der einen Ist-Zustand angibt. So kann durch Vergleich mit einem Soll-Datensatz bzw. Soll-Zustand durch die Gatewayeinrichtung 60 überprüft werden, ob die richtige Firmware 71 durch den Techniker oder Fahrer von dem Webserver 100 heruntergeladen wurde. Wird festgestellt, dass nicht sämtlich erwarteten Komponenten angeschlossen sind, so wird ein Fehler gespeichert. In einem Ausführungsbeispiel sendet die Gatewayeinrichtung 60 kein Signal über den Fahrzeugbus 42 sondern hört diesen nur ab, um durch das Abfragen von Signalen bzw. Nachrichten der einzelnen Fahrzeugkomponenten diese zu ermitteln.

Darüber hinaus können auf Komponenten automatisch identifiziert werden, die an dem Klimabus 40 angeschlossen sind. Z.B. sendet der Heizer 30 in Reaktion auf das Abfragesignal 72 eine Komponentenidentifikationsnummer 73 an die Gatewayeinrichtung 60. Auch die Lüfterklappe 3, das Bedienelement 2 und die Lüftungseinrichtung 20 senden entsprechende Komponentenidentifikationsnummern 73 die die Gatewayeinrichtung 60. Zusammen bilden die Komponentenidentifikationsnummern 73 einen Teil des Ist-Datensatzes.

Zusätzlich können Fahrzeugkomponenten 20 oder Komponenten- oder Funktionsgruppen oder Funktionen in unterschiedlichen Inbetriebnahme-Sub-Routinen identifiziert und/oder getestet werden. Die Komponenten können direkt mit der Gatewayeinrichtung 60 verbunden sein oder mit dieser zusammenarbeiten, um eine bestimmte Funktion umzusetzen. Z.B. wird getestet, ob korrekte Spannungen an den Ausgängen der direkt angeschlossenen Fahrzeugkomponenten 20 vorliegen. Auch kann eine Identifizierung der direkt angeschlossenen Fahrzeugkomponenten 20 durch das Übermitteln oder Abfragen einer Identifikationsnummer ausgeführt werden.

Die Gatewayeinrichtung 60 kann unter Verwendung der gesammelten Informationen, d.h. unter Verwendung des Ist-Datensatzes, eine Inbetriebnahmeroutine bestimmen. Die Inbetriebnahmeroutine kann dynamisch, z.B. unter Verwendung einer oder mehrerer Konfigurationsdateien, erzeugt werden. Es können eine oder mehrere Routinen aus einer Vielzahl von Routinen, z.B. den Inbetriebnahme-Sub-Routinen, ausgewählt werden, die als Teil der Firmware 71 gespeichert sind. Die Konfigurationsdatei kann zusätzlich angeben, welche Komponenten und in welcher Reihenfolge diese in Betrieb genommen und getestet werden können.

Die Fahrzeugkomponenten 2, 3, 30, die an den Klimabus 40 angeschlossen sind, werden nacheinander in Betrieb genommen, um deren Funktionsfähigkeit festzustellen. Zunächst werden Leitungen eines Heizkreislaufs, die mit dem Heizer 30 in Wirkverbindung stehen, mit Wasser oder einem ähnlichen Wärmeträger befüllt. Mittels Sensoren wird überprüft, ob die Leitungen korrekt befüllt sind. In einem Ausführungsbeispiel wird der Heizer 30 nach einem Befüllungsversuch in Betrieb genommen. Ob das Befüllen erfolgreich war, wird über einem Temperatursensor bestimmt. Steigt die Temperatur zu schnell an oder überschreitet sie eine vorgegebene Maximaltemperatur, so ist dies ein Indikator dafür, dass keine korrekte Befüllung des Heizkreislaufs stattgefunden hat. Andernfalls kann von einer korrekten Befüllung ausgegangen werden.

Darüber hinaus wird festgestellt, ob die Temperatur im Fahrzeuginnenraum nach einem vorgegebenen Zeitintervall einem Soll-Fahrzeugtemperaturwert entspricht.

In einem Ausführungsbeispiel laufen zumindest einige der Inbetriebnahme-Sub-Routinen parallel zueinander ab, wodurch die zur Inbetriebnahme notwendige Zeit erheblich verkürzt wird. Z.B. können die Lüfterklappen 3 und die Lüftungseinrichtung 20 als erste Funktionsgruppe in Betrieb genommen werden, während bereits ein Befüllen des Heizkreislaufs (zweite Funktionsgruppe) erfolgt.

Nachdem alle Komponenten, die an den Klimabus 40 angeschlossen sind getestet wurden, wird ein Inbetriebnahmeprotokoll 74 in der Gatewayeinrichtung 60 gespeichet. Darüber hinaus kann das Inbetriebnahmeprotokoll 74 an das mobile Endgerät 70 übertragen werden. Das mobile Endgerät 70 wiederum kann das Inbetriebnahmeprotokoll 74 auf dem Webserver 100 abspeichern, sodass Garantieansprüche protokolliert werden können. Hierzu kann die Gatewayeinrichtung 60 das Inbetriebnahmeprotokoll 74 mit einer elektronischen Signatur versehen, sodass fälschungssicher eine Zuordnung von Inbetriebnahmeprotokoll 74 und Gatewayeinrichtung 60 erstellt werden kann.

Die Fig. 3 zeigt noch einmal eine schematische Darstellung der Gatewayeinrichtung 60. Die Gatewayeinrichtung 60 umfasst eine Recheneinheit 61, die z.B. als Mikrocontroller ausgebildet ist. Die Recheneinrichtung 61 ist dazu ausgebildet, eine in der Speichereinrichtung 65 gespeicherte Firmware auszuführen. Darüber hinaus verfügt die Gatewayeinrichtung 60 über eine Kommunikationseinrichtung 62 zur drahtlosen Kommunikation, z.B. mittels Bluetooth. Die BUS-Kommunikationseinrichtung 63 der Gatewayeinrichtung 60 ist zum Empfangen und zum Senden von Daten über mindestens einen BUS 40, 42 ausgebildet. Die Empfangenen Daten können in der Speichereinrichtung 65 gespeichert werden, so dass die Recheneinheit 61 diese verarbeiten kann. Ferner verfügt die Gatewayeinrichtung 60 über einen PWM-Anschluss, mittels dessen ein PWM-Signal an einen Verbraucher, z.B. die Lüftereinrichtung 20, gesendet werden kann. Zur Erzeugung des PWM-Signals kann die Recheneinrichtung 61 verwendet werden. Zusätzlich verfügt die Gatewayeinrichtung 60 über einen Temperatursensor 66 und/oder einen Drucksensor 67. Die beiden Sensoren 66 und 67 können Signale abgeben, die von der Recheneinrichtung 61 als Temperatur bzw. Druck interpretiert werden und in der Speichereinrichtung 65 zwischengespeichert werden können. Unter Verwendung der Sensordaten kann die Recheneinrichtung 61 Steuerbefehle berechnen, die zur Steuerung des Heizers 30 verwendet werden können.

Darüber hinaus können einer oder mehrere der folgenden Schritte Teil des erfindungsgemäßen Verfahrens sein:
1) Auswählen einer Firmware auf einem mobilen Endgerät;
2) Herunterladen der Firmware von einem Webserver auf das mobile Endgerät;
3) Übertragen der Firmware von dem mobilen Endgerät auf eine Gatewayeinrichtung;
4) Laden der Firmware auf der Gatewayeinrichtung;
5) Initiieren der Inbetriebnahme eines Klimasystems durch einen Benutzer des mobilen Endgeräts;
6) Auslesen einer Fahrzeugkennung von einem Fahrzeugbus; und
7) Feststellen, ob die Firmware einem der Fahrzeugkennung zugeordneten Fahrzeugtyp zuordenbar ist;
8) Erkennen von Fahrzeugkomponenten, die an den Klimabus angeschlossen sind;
9) Prüfen der Fahrzeugkomponenten, die an den Klimabus angeschlossen sind;
10)Automatische Inbetriebnahme der Fahrzeugkomponenten, wobei die automatische Inbetriebnahme Folgendes umfassen kann:
   a. Befüllen von Leitungen mit einem Fluid, insbesondere einem Wärmeträger;
   b. Starten eines Heizer, der mit den Leitungen verbunden ist;
   c. Messen einer Temperatur, insbesondere in der Fahrerkabine eines Fahrzeugs;
   d. Prüfen von Lüfterklappen, wobei eine Bestätigung durch einen Techniker ausgeführt werden kann;
11)Ablegen einer Protokolldatei auf der Gatewayeinrichtung, insbesondere in einer Speichereinrichtung der Gatewayeinrichtung;
12)Übertragen der Protokolldatei auf einen Webserver.

### Bezugszeichenliste

- 1: Fahrzeug
- 2: Bedienelement
- 3: Lüfterklappe
- 20: Lüftungseinrichtung
- 21: Lüftungsverbindung
- 30: Heizer/Standheizung
- 40: Klimabus, W-BUS
- 41, 41', 41": Anschluss für W-BUS
- 42: Fahrzeugbus, LIN-BUS
- 43, 43': Anschluss für Fahrzeubus/LIN-BUS
- 55: Recheneinheit bzw. Mikrocontroller
- 60: Gatewayeinrichtung
- 61: Recheneinrichtung/Mikrocontroller
- 62: Drahtlos-Kommunikationseinrichtung
- 63: BUS-Kommunikationseinrichtung
- 64: PWM-Anschluss
- 65: Speichereinrichtung
- 66: Temperatursensor
- 67: Drucksensor
- 70: (mobiles) Endgerät
- 71: Firmware
- 72: Abfragesignal
- 73: Komponentenidentifikationsnummer
- 74: Inbetriebnahmeprotokoll
- 80: Steuergerät
- 100: Webserver

## Patentansprüche

1. Verfahren zur Inbetriebnahme eines Klimasystems eines Fahrzeugs (1), Folgendes umfassend:
a) Einlesen eines Soll-Datensatzes, der einen Soll-Fahrzeugzustand angibt, wobei der Soll-Datensatz eine Vielzahl von durch den Fahrzeugtyp des Fahrzeugs (1) bestimmten Fahrzeugkomponenten (2, 3, 20, 30, 80) angibt, die vorhanden sein müssen;
b) Erfassen eines Ist-Datensatzes, der einen Ist-Fahrzeugzustand angibt, durch Messen mindestens eines Signals und/oder Kommunizieren mit mindestens einer Fahrzeugkomponente (2, 3, 20, 30, 80);
c) Vergleichen des Ist-Fahrzeugzustands mit einem Soll-Fahrzeugzustand;
d) Aktivieren mindestens einer Funktion des Klimasystems nur dann, wenn der Ist-Fahrzeugzustand dem Soll-Fahrzeugzustand entspricht.

2. Verfahren nach Anspruch 1,
**dadurch gekennzeichnet, dass**
der Soll-Datensatz eine Vielzahl von Signalen von Fahrzeugkomponenten (2, 3, 20, 30, 80) angibt.

3. Verfahren nach einem der vorhergehenden Ansprüche,
**dadurch gekennzeichnet, dass**
das Erfassen durch Messen von Signalen ausgeführt wird, die auf einem Bussystem (40, 42) übertragen werden, insbesondere auf einem Klimabus (40) und/oder einem Fahrzeugbus (42).

4. Verfahren nach einem der vorhergehenden Ansprüche,
**dadurch gekennzeichnet, dass**
das Messen ein Messen von Spannung und/oder Strom an einem Stecker einer Gatewayeinrichtung (60) umfasst.

5. Verfahren nach einem der vorhergehenden Ansprüche,
**dadurch gekennzeichnet, dass**
das Kommunizieren ein Auslesen von Statusinformationen und/oder Steuerbefehlen auf einem Fahrzeugbus (42) umfasst.

6. Verfahren nach einem der vorhergehenden Ansprüche,
**dadurch gekennzeichnet, dass**
das Vergleichen einen Abgleich umfasst, ob die Daten des Ist-Datensatzes in dem Soll-Datensatz enthalten sind.

7. Verfahren nach einem der vorhergehenden Ansprüche,
**dadurch gekennzeichnet, dass**
der Soll-Datensatz mindestens eine Fahrzeugkomponente (2, 3, 20, 30, 80) bezeichnet, wobei das Vergleichen ein Prüfen umfasst, ob ein Signal von der mindestens einen bezeichneten Fahrzeugkomponente (2, 3, 20, 30, 80) gemessen ist.

8. Verfahren nach einem der vorhergehenden Ansprüche, insbesondere nach Anspruch 2,
**gekennzeichnet durch**
- Prüfen einer/der Vielzahl von Fahrzeugkomponenten (2, 3, 20, 30, 80) unter Verwendung des Soll-Datensatzes und des Ist-Datensatzes;
- Speichern eines Fehlerprotokolls (74) unter Verwendung der geprüften Vielzahl von Fahrzeugkomponenten (2, 3, 20, 30, 80).

9. Computerlesbares Speichermedium, welches Instruktionen enthält, die mindestens einen Prozessor dazu veranlassen ein Verfahren nach einem der vorhergehenden Ansprüche zu implementieren, wenn die Instruktionen durch den Prozessor ausgeführt werden.

10. Klimasystem für ein Fahrzeug (1), folgendes umfassend:
- einen Fahrzeugbus (42) an den eine Vielzahl von durch den Fahrzeugtyp des Fahrzeugs (1) bestimmten Fahrzeugkomponenten (80) angeschlossen ist, die einen Ist-Datensatz über den Fahrzeugbus (42) übertragen, der einen Ist-Fahrzeugzustand angibt;
- eine Gatewayeinrichtung (60), die über den Fahrzeugbus (42) mit der Vielzahl von Fahrzeugkomponenten (80) kommunikativ verbunden ist,
**dadurch gekennzeichnet, dass**
die Gatewayeinrichtung (60) dazu ausgebildet ist, den Ist-Datensatz mit einem Soll-Datensatz, der einen Soll-Fahrzeugzustand angibt, zu vergleichen, wobei der Soll-Datensatz eine Vielzahl von Fahrzeugkomponenten (2, 3, 20, 30, 80) angibt, die vorhanden sein müssen, wobei eine Funktion der Gatewayeinrichtung (60) aktiviert wird, nur wenn der Ist-Fahrzeugzustand dem Soll- Fahrzeugzustand entspricht.

11. Klimasystem nach Anspruch 10,
**dadurch gekennzeichnet, dass**
die Gatewayeinrichtung (60) eine Speichereinrichtung (65) zu Speicherung einer Vielzahl von Soll-Fahrzeugzuständen umfasst, wobei die Gatewayeinrichtung (60) dazu ausgebildet ist, einen Soll-Fahrzeugzustand unter Verwendung einer Fahrzeugkennung für das Vergleichen auszuwählen.

12. Klimasystem nach Anspruch 10,
**gekennzeichnet durch**
ein Steuergerät (80) des Fahrzeugs (1, 1'), wobei die Gatewayeinrichtung (60) dazu ausgebildet ist, eine von dem Steuergerät (80) über den Fahrzeugbus (42) übertragene Fahrzeugkennung einem Soll-Zustand zuzuordnen.

13. Klimasystem nach einem der Ansprüche 10 bis 11,
**gekennzeichnet durch**
- einen Heizer (30), insbesondere einen Zuheizer (30), und mindestens einen Temperatursensor, die jeweils über einen Klimabus (40) kommunikativ mit der Gatewayeinrichtung (60) verbunden sind,
wobei die Gatewayeinrichtung (60) dazu ausgebildet ist, den Heizer (30) zu aktiveren, wenn ein durch den Temperatursensor bereitgestellter Temperaturwert durch den Soll-Datensatz angegeben wird.

## Claims

1. Method for commissioning an air conditioning system (1) of a vehicle, comprising:
a) Reading in a target data record indicating a target vehicle state, wherein the target data record specifies a plurality of vehicle components (2, 3, 20, 30, 80) defined by the vehicle type of the vehicle (1), which must be present;
b) Recording an actual data record indicating an actual vehicle state by measuring at least one signal and/or communicating with at least one vehicle component (2, 3, 20, 30, 80);
c) Comparing the actual vehicle state with a target vehicle state;
d) Activating at least one function of the air conditioning system only if the actual vehicle state corresponds to the target vehicle state.

2. Method according to claim 1,
**characterized in that**
the target data record specifies a number of signals from vehicle components (2, 3, 20, 30, 80).

3. Method according to one of the preceding claims,
**characterized in that**
the recording is carried out by measuring signals transmitted on a bus system (40, 42), in particular on an air conditioning bus (40) and/or a vehicle bus (42).

4. Method according to one of the preceding claims,
**characterized in that**
measuring comprises measuring voltage and/or current on a plug connector of a gateway device (60).

5. Method according to one of the preceding claims,
**characterized in that**
communication comprises reading status information and/or control commands on a vehicle bus (42).

6. Method according to one of the preceding claims,
**characterized in that**
the comparison comprises a comparison of whether the data of the actual data record is contained in the target data record.

7. Method according to any one of the preceding claims,
**characterized in that**
the target data record designates at least one vehicle component (2, 3, 20, 30, 80), wherein the comparison comprises a check of whether a signal from the at least one designated vehicle component (2, 3, 20, 30, 80) is measured.

8. Method according to any one of the preceding claims, in particular Claim 2,
**characterized by**,
- Checking a/the number of vehicle components (2, 3, 20, 30, 80) using the target data record and the actual data record;
- Saving an error log (74) using the checked number of vehicle components (2, 3, 20, 30, 80).

9. Computer-readable storage medium containing instructions that cause at least one processor to implement a method according to any one of the preceding claims when the instructions are executed by the processor.

10. Air conditioning system for a vehicle (1), comprising:
- a vehicle bus (42) to which a plurality of vehicle components (80) defined by the vehicle type of the vehicle (1) are connected, which transmit an actual data record via the vehicle bus (42) that indicates an actual vehicle state;
- a gateway device (60) that is communicatively connected to the plurality of vehicle components (80) via the vehicle bus (42),
**characterized in that**
the gateway device (60) is designed to compare the actual data record with a target data record, which indicates a target vehicle state, wherein the target data record specifies a plurality of vehicle components (2, 3, 20, 30, 80) which must be present, wherein a function of the gateway device (60) is activated only if the actual vehicle state corresponds to the target vehicle state.

11. Air conditioning system according to Claim 10,
**characterized in that**
the gateway device (60) comprises a memory device (65) for the storage of a number of target vehicle states, wherein the gateway device (60) is designed to select a target vehicle state for the comparison using a vehicle identification.

12. Air conditioning system according to Claim 10,
**characterized by**
a control unit (80) of the vehicle (1, 1'), wherein the gateway device (60) is designed to assign a vehicle identification transmitted by the control unit (80) via the vehicle bus (42) to a target state.

13. Air conditioning system according to either one of Claims 10 and 11,
**characterized by**
- a heater (30), in particular an auxiliary heater (30), and at least one temperature sensor, each of which is communicatively connected to the gateway device (60) via an air conditioning bus (40),
wherein the gateway device (60) is designed to activate the heater (30) if a temperature value provided by the temperature sensor is specified by the target data record.

## Revendications

1. Procédé de mise en service d'un système de climatisation d'un véhicule (1), comprenant ce qui suit :
a) chargement d'un jeu de données de consigne, lequel indique un état de véhicule de consigne, le jeu de données de consigne indiquant une pluralité de composants de véhicule (2, 3, 20, 30, 80) déterminés par le type de véhicule du véhicule (1), qui doivent être présents ;
b) acquisition d'un jeu de données réel, qui indique un état de véhicule réel, en mesurant au moins un signal et/ou en communiquant avec au moins un composant de véhicule (2, 3, 20, 30, 80) ;
c) comparaison de l'état de véhicule réel avec un état de véhicule de consigne ;
d) activation d'au moins une fonction du système de climatisation seulement lorsque l'état de véhicule réel correspond à l'état de véhicule de consigne.

2. Procédé selon la revendication 1, **caractérisé en ce que** le jeu de données de consigne indique une pluralité de signaux de composants de véhicule (2, 3, 20, 30, 80).

3. Procédé selon l'une des revendications précédentes, **caractérisé en ce que** l'acquisition est effectuée en mesurant des signaux qui sont transmis sur un système de bus (40, 42), notamment sur un bus de climatisation (40) et/ou un bus de véhicule (42).

4. Procédé selon l'une des revendications précédentes, **caractérisé en ce que** la mesure comprend une mesure de tension et/ou de courant au niveau d'une fiche d'un dispositif de passerelle (60).

5. Procédé selon l'une des revendications précédentes, **caractérisé en ce que** la communication comprend une lecture d'informations d'état et/ou d'instructions de commande sur un bus de véhicule (42).

6. Procédé selon l'une des revendications précédentes, **caractérisé en ce que** la comparaison comprend un rapprochement visant à déterminer sur les données du jeu de données réel sont contenues dans le jeu de données de consigne.

7. Procédé selon l'une des revendications précédentes, **caractérisé en ce que** le jeu de données de consigne désigne au moins un composant de véhicule (2, 3, 20, 30, 80), la comparaison comprenant une vérification si un signal de l'au moins un composant de véhicule (2, 3, 20, 30, 80) désigné est mesuré.

8. Procédé selon l'une des revendications précédentes, notamment selon la revendication 2, **caractérisé par**
- vérification d'un / de la pluralité de composants de véhicule (2, 3, 20, 30, 80) en utilisant le jeu de données de consigne et le jeu de données réel ;
- enregistrement d'un protocole d'erreur (74) en utilisant la pluralité de composants de véhicule (2, 3, 20, 30, 80) vérifiés.

9. Support d'enregistrement lisible par ordinateur, lequel contient des instructions qui amènent au moins un processeur à mettre en œuvre un procédé selon l'une des revendications précédentes lorsque les instructions sont exécutées par le processeur.

10. Système de climatisation pour un véhicule (1), comprenant ce qui suit :
- un bus de véhicule (42) auquel sont raccordés une pluralité de composants de véhicule (80) déterminés par le type de véhicule du véhicule (1), lesquels transmettent par le biais du bus de véhicule (42) un jeu de données réel qui indique l'état de véhicule réel ;
- un dispositif de passerelle (60) qui est relié en communication à la pluralité de composants de véhicule (80) par le biais du bus de véhicule (42),
**caractérisé en ce que**
le dispositif de passerelle (60) est configuré pour comparer le jeu de données réel avec un jeu de données de consigne, qui indique un état de véhicule de consigne, le jeu de données de consigne indiquant une pluralité de composants de véhicule (2, 3, 20, 30, 80) qui doivent être présents, une fonction du dispositif de passerelle (60) étant activée seulement lorsque l'état de véhicule réel correspond à l'état de véhicule de consigne.

11. Système de climatisation selon la revendication 10, **caractérisé en ce que** le dispositif de passerelle (60) comprend un dispositif de mémorisation (65) destiné à mémoriser une pluralité d'états de véhicule de consigne, le dispositif de passerelle (60) étant configuré pour sélectionner un état de véhicule de consigne en utilisant une identification de véhicule pour la comparaison.

12. Système de climatisation selon la revendication 10, **caractérisé par** un contrôleur (80) du véhicule (1, 1'), le dispositif de passerelle (60) étant configuré pour associer à un état de consigne une identification de véhicule transmise par le contrôleur (80) par le biais du bus de véhicule (42).

13. Système de climatisation selon l'une de revendications 10 à 11, **caractérisé par**
- un appareil de chauffage (30), notamment un appareil de chauffage d'appoint (30), et au moins une sonde de température, qui sont respectivement reliés en communication avec le dispositif de passerelle (60) par le biais d'un bus de climatisation (40),
le dispositif de passerelle (60) étant configuré pour activer l'appareil de chauffage (30) lorsqu'une valeur de température fournie par la sonde de température est indiquée par le jeu de données de consigne.
